# EUROPEAN PATENT SPECIFICATION

(11) **EP 2 981 490 B1**
(45) Date of publication and mention of the grant of the patent: **04.07.2018**
(21) Application number: 14778436.7
(22) Date of filing: 03.04.2014
(51) Int. Cl.: B65G 33/20, B65G 65/46

(54) **FEEDER TUBE**
ZUFÜHRROHR
TUBE D'ALIMENTATION

(30) Priority: 03.04.2013 SE 1350416
(43) Date of publication of application: 10.02.2016
(73) Proprietor: Unozawa Engineering CO., LTD, Shibuya-ku Tokyo 150-0013 (JP)
(72) Inventor: FORSBERG, Göran, S-653 50 Karlstad (SE)
(74) Representative: Johansson, Lars E.
(86) International application number: PCT/SE2014/050398
(87) International publication number: WO 2014/163567

(56) References cited:
- WO-A1-90/15766
- WO-A1-90/15766
- WO-A2-02/090223
- DK-B- 143 062
- SE-B- 404 684
- US-A- 5 709 296
- US-A- 5 709 296

## Description

### TECHNICAL FIELD

The invention concerns a reversible tube, i.e. a conveyor intended for bulk product, in particular a feed-out device, which comprises a cylindrical drum or tube in which there are accommodated inlet openings distributed along the length of the tube, a screw conveyor disposed coaxially with the tube within the tube, means for rotating the tube about its axis, means for rotating the screw conveyor relative to the tube, means for displacing the feeder tube in the lateral direction.

### PRIOR ART

Feeder tubes of the above-stated type are previously known and commonly used.

Examples of such feeder tubes are described in SE 7611862-9, which describes a first generation non reversible feeder tubes. A second generation with reversible feeder tubes are known from WO9526310 and WO02090223. Feeder tubes can be used as conveyors for a host of different bulk products (bulk material) such as wood chips, coal, paper pulp, peat, sand, cement, ashes, grain, pellets, etcetera. In order to facilitate the movements of the goods in the silo or equivalent in which the bulk product is stored and stimulate its feed-in through feed-in openings, activators, i.e. projections on the tube, are located at the back edge of the inlet openings. By back edge is herein meant the rear edge of the inlet opening viewed in the direction of rotation.

Document US5709296 discloses a reversible feeder tube according to the preamble of claim 1. A general problem with feeder tubes of this kind is spillage of bulk, at one end of the feeder tube. i.e. at the end side opposite it's outlet end or feeding side. This end side of the feeder tube protrudes out from the silo through a longitudinal opening in the silo side wall and rests upon a movable supporting wagon. A traversing kind of feeder tube is configured to move back and forth by the wagons and along the longitudinal opening during conveying operation. The wagon upon which the feeder rests is arranged to move along a side like space positioned next to the longitudinal opening outside of the silo. A heretofore unsolved problem is that bulk material that exits through the longitudinal opening in the silo wall and pile up in the side like space in front of the feeder tube as it moves in a lateral direction. In WO9526310 there is suggested a solution to this using fixed outer threads. At the portion of the tube which is protruding out from the silo there is no head load from bulk product and therefore the feeding into the feeder tube will be less efficient than along the rest of the feeder tube inside the silo where it is subject to gravitational pressure. It may be difficult to collect all the material from the side space into the feeder and as a consequence, a pile of bulk products may accumulate in front of the moving feeder tube, that will eventually spill over and out of the side. Accordingly it leads to undesired spillage.

### SUMMARY OF THE INVENTION

It is an object of the invention to improve on the situation described above, e.g. to minimize spillage, which is achieved by means of a reversible feeder tube arranged in accordance with the appended claims.

Thanks to the invention an improved feeding of bulk material may be achieved also at the outer end of the feeder tube (i.e. the end portion of the feeder opposite the outlet portion) despite lack of pressure from bulk material at this part of the feeder. Substantial savings may be achieved thanks to minimized spillage and also an improved environment is obtained. Bulk material with certain flow characteristics like pellets has not earlier been possible to handle with previous feeder design but thanks to the invention it is possible to control flow as well as reclaim.

Further aspects will be evident from the following.

### BRIEF DESCRIPTION OF THE DRAWINGS

In the following description of some preferred embodiments, reference will be made to the appended drawings, in which:
- Fig. 1: schematically shows a feeder tube disposed in a silo for bulk product,
- Fig. 2: schematically shows a side view of a feeder tube according to an embodiment of the invention, in operation,
- Fig. 3: shows a front view, i.e. 90 degrees compared to Fig. 2, of a feeder tube according to the invention,
- Fig. 4: shows a cross-sectional view of a portion of the feeder tube of Fig. 3,
- Fig. 5: shows a feeder tube according to a further embodiment of the invention,
- Fig 6: shows the same view as Fig 3, with the feeder tube 90 degrees further rotated,
- Fig 7: shows a perspective view of a feeder tube according to the a further embodiment of the invention,
- Fig 8: shows a front view of a further embodiment of the invention,
- Fig 9: shows the conveyer screw of feeder tube according to Fig 8, and
- Fig 10: schematically shows a side view of a modified feeder tube according to the invention.

### DESCRIPTION OF PREFERRED EMBODIMENTS

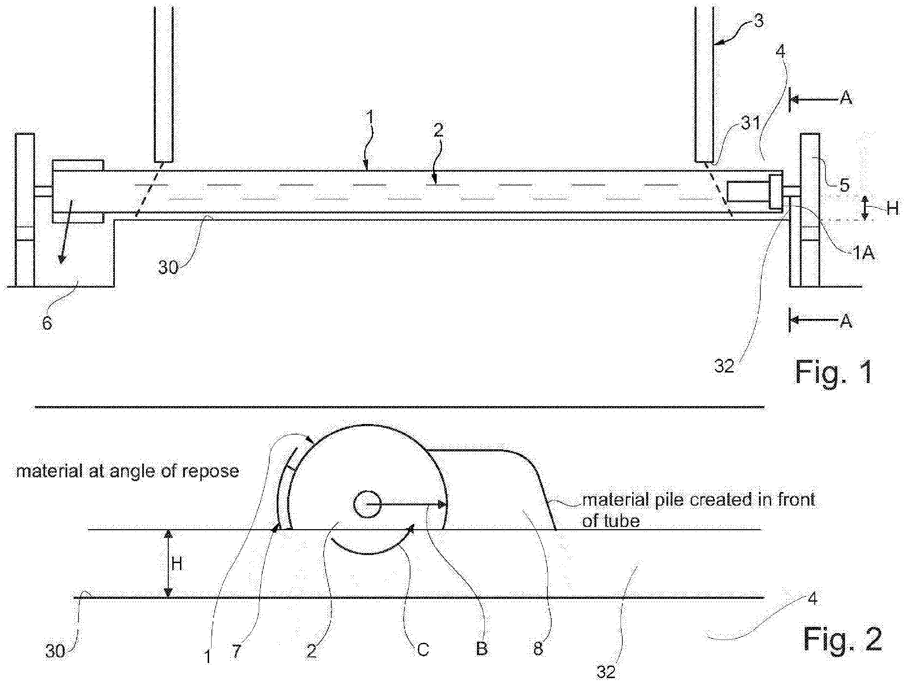

With reference to Fig. 1 there is shown a reversible feeder tube having a known basic construction, comprising a cylindrical reversible tube 1 and a screw conveyor 2 disposed coaxially within the tube. Further, there are one or more motors (not shown) for rotating the tube 1 about its axis and for rotating the screw conveyor 2 relative to the tube and so-called "traversing gear" (not shown) for moving the entire feeder tube in the lateral direction through bulk material within a compartment such as a silo. (as is known per se). This lateral displacement is effected directly at right-angles to the axis of the feeder tube 1, within a silo 3 for bulk product (not shown) adjacent the bottom 30 of the silo 3, feeding bulk in a direction away from a tail end 1A into an output space 6. That which has hitherto been described belongs to the prior art and does not therefore constitute any part of the new invention.

The outer end 1A of the feeder tube 1, 2 protrudes through a lower opening 31 in the silo and rests upon a support wagon 5 which can move in a lateral direction in a side space 4. A vertical plate 32 protrudes at the outer edge of the silo bottom 30, to a height H below the centre of the tube 1. The feeder tube 1,2 continuously feeds out material into the output space 6. During extraction operation the bulk near the feeder tube will get stirred and set into motion leading to that some product will inevitably fall into and enter the side space 4 and accumulate, in front of the moving tube, eventually creating spillage. According to the invention measures are taken to avoid or at least minimize such spillage.

In Fig. 2 there is shown a schematic side view of the outer part of the feeder tube 1, 2 according to the invention. As shown the outer tube 1 rotates in a direction C such that its lower surface will move in the same direction B as the movement of the whole feeder tube 1, 2, and with a higher speed than the travel speed B of the whole tube 1. This will to a height that may surpass the height H of the vertical plate 32, leading to undesired spillage into the side space 4. Create a pile of bulk material 8 building up in front of the feeder tube 1, 2. In order to improve feeding of bulk material 8 into the feeder tube 1,2 also within the side space 4 the feeder tube is arranged with one or several feeding device 7.

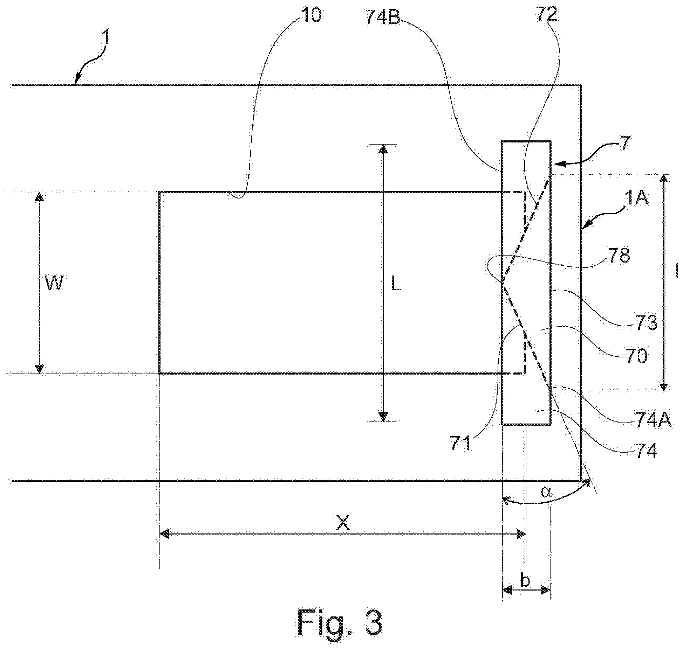

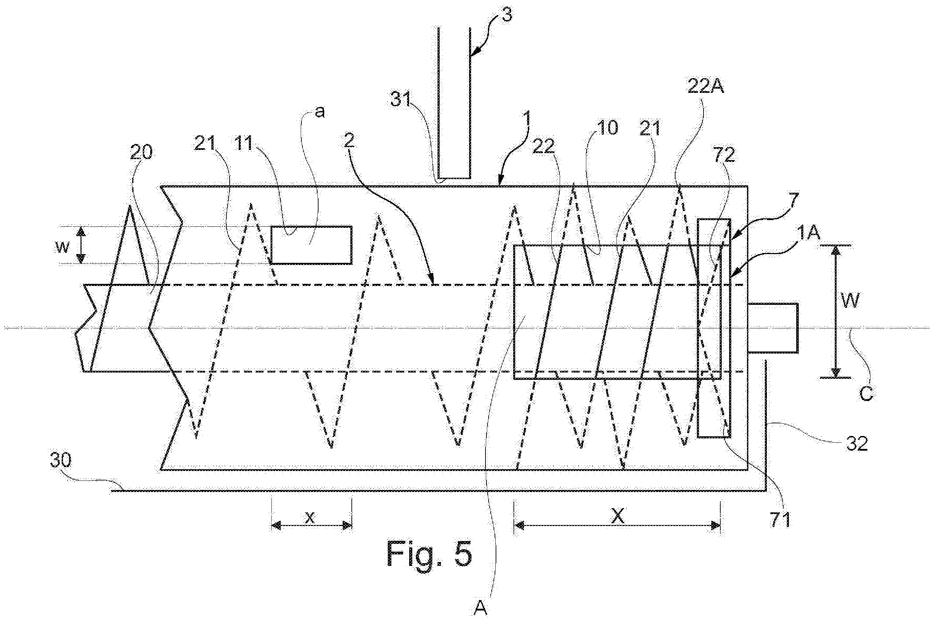

Fig. 3 is showing that the feeding device 7 is positioned adjacent the outer tail end 1A of the feeder tube and in this embodiment symmetrically arranged in a relation to an inlet opening 10. A symmetrical arrangement is not required but feeding device 7 may be positioned at any angle along circumference of outer tube 1. The feeding device 7 comprises a triangularly shaped base part 70 and radially outwards on top of that 70 there is a curved plate 74 that may extend further than the triangular body 70. The outer edge 74A of the plate 74 is positioned substantially in line with the outer wall 73 of the triangular body 70.The inner edge 74B may substantially be in line with an apex 78 of the triangular body 70, such that the curved plate 74 forms a lid on the top of the triangular body 70, i.e. closing off the space therein. The length L of the plate 74 is substantially longer than the outer wall 73 of the triangular body. The measures of the inlet 10 is preferably such that it's width W is smaller than the length L of the plate member 74 and preferably also somewhat smaller than the length 1 of the outer wall 73 of the triangular body 70. The length X of the inlet 10 in the side space 4 is substantially larger than the length x see also Figs. 3 and 5 of the inlets 11 along the other part of the feeder tube 1. Also the width W is larger than the width w of the other inlets 11, such that the open area A of the inlet 10 within the side space 4 is at least 20% larger, more preferred at least 50% larger and more preferred more than 70% larger, than the area a of the other inlets 11. To use holes 10 of this size has shown to be possible within the side space 4, thanks to the low pressure exerted by the bulk material at this location.

The axial extension b of the plate 74 is preferably about the same as the axial extension of the body 70 of the feeding device 7, and will preferably be in the range of 20-60% of tube diameter. It should be understood that the plate 74 need not be rectangular, but that various deviations from a rectangular design may be used to fulfill its function.

It is evident that also other shapes than triangular may be used for the body 70, to obtain the desired function, e.g. concave/plough shaped surfaces 71, 72, convex surfaces, etcetera.

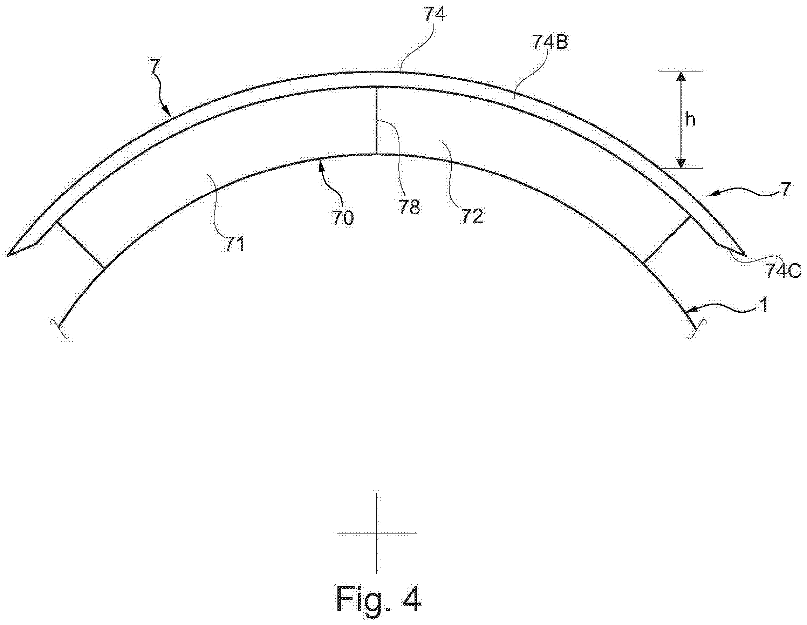

In Fig. 4 there is shown a side view of a portion of a feeder tube 1 showing the feeding device 7 from the side. It is shown that the triangular body 70 has a substantial height h creating feeding sides 71,72, that thanks to its inclination α will assist in pushing bulk material 8 first axially and finally into the inlet opening 10. The plate 74 will also assist in pushing the bulk material 8 into the inlet opening 10, by withholding it 8 during rotation of the tube 1. In a preferred embodiment the height h of the feeding device 7 is about 10-30 % of the diameter of the tube 1, and the inclination α between 10-40°, corresponding to the actual angle α if straight surfaces 71, 72 and some average tangent if curved surfaces 71, 72. Furthermore the height h is preferably chosen such that the outer surface of the plate 74 will move very close to the bottom 30 (e.g. 1-30 mm above the bottom 30) to thereby further improve the feeding efficiency.

Further, it is shown in Fig. 4 that there preferably is arranged a tapered end 74C at each end of the plate 74 to minimize penetration resistance and to improve feeding inwards radially.

In Fig. 5 there is shown a cross-sectional side view of a portion near the outer end 1A of a feeder tube 1, 2 according to the invention, which is, arranged with a feeding device 7 as explained in connection with Figs. 3 and 4. The feeder tube 1, 2 comprises a conventional screw shaft 20 on to which there is arranged a helical blade 21, in a conventional manner. Furthermore the feeder tube 1, 2 according to the invention is arranged with a second helical blade 22 positioned adjacent the outer end in connection with the larger inlet opening 10, positioned in the side space 4. As is shown the additional helical blade 22 has the same inclination as the first helical blade 21 and is interposed in between the traditional helical blade 21, such that the distance between adjacent blade parts 21, 22 within the side space 4 is half the distance (if positioned exactly in between, but it is evident that other also non-symmetrical positions will also provide the same basic function) compared to the distance between two adjacent blade parts of the traditional blade 21. The extra blade 22 will assist to increase feeding efficiency within the space 4. It is evident that more than one extra blade 22 may be used if appropriate/desired. Moreover the second helical blade 22 protrudes more radially outwards than the traditional blade 21, such that the outer edge 22A is positioned close to the inner surface of the tube 1. In connection with the more frequent inlets 11, a relatively large distance between the inner surface of the tube 1 and the edge 21A of the first helical blade 21 is preferred, e.g. about 40-60 mm, whereas for the for the edge 22A of the second blade 22 a shorter distance improves the efficiency, and therefore preferably may be at least 50% less. In a preferred embodiment that distance is between 1 to 10 mm.

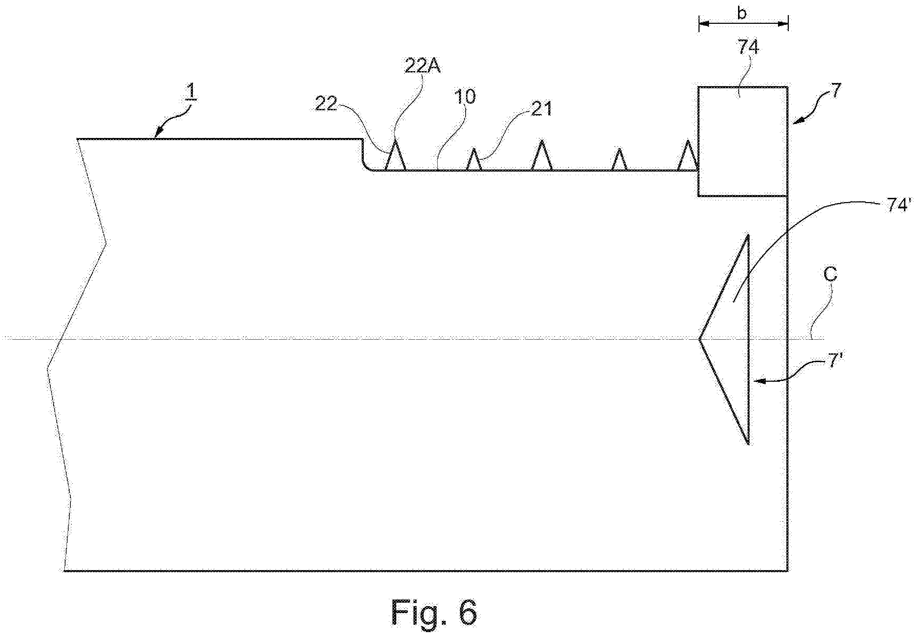

In Fig. 6 there is shown the same kind of view as in Fig. 5 (without showing any cross-section having the inlet opening 10 rotated 90 degrees, showing that the second helical blade 22 preferably protrudes further from the center C of the tube 1, 2 than the second helical blade 21. Further it is shown that the feeding device 7 is positioned centrally i.e. symmetrically in relation to the inlet opening 10. The outer plate 74 is positioned a substantial distance L (e.g. 30 mm to 150mm) away from the outer surface of the tube 1. Furthermore it is shown that an extra feeding device 7' may be arranged 90 degrees displaced away from the inlet opening 10, to further assist in moving bulk material away from the outer wall. Preferably also this free standing feeding device 70 is arranged with a lid 7', to hinder bulk accumulate therein, but also without a lid 74' the basic function is achieved, since the rear wall will hinder bulk from being pushed in the wrong direction.

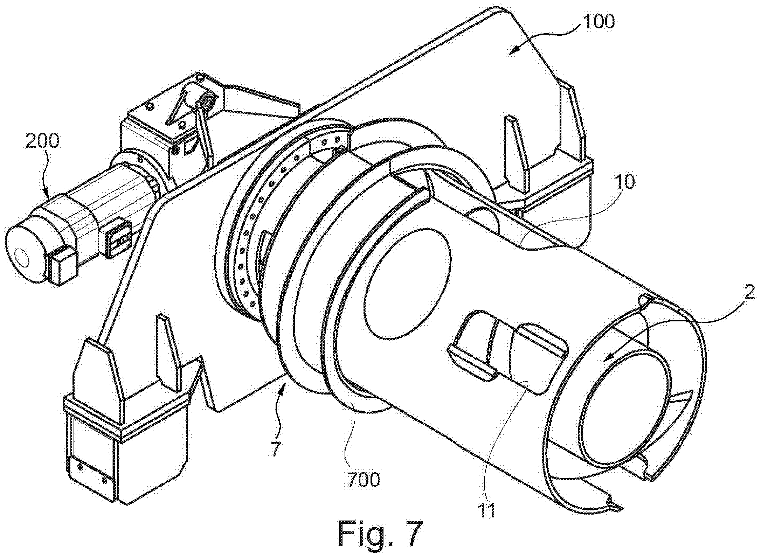

Fig 7 shows a further embodiment according to the invention where the feeding device 7 is in the form of an outer helical blade 700 positioned outside of the feeder tube 1, 2. The outer helical blade 700 is driven by an independent motor (not shown) to facilitate the same direction of rotation at all times, such that the pile of bulk material 8 in front of the feeder tube 1, 2 will always be pushed in a direction away from the wagon 5, towards the inlet opening 10 and eventually no pile 8 is created. In Fig. 7 it is also shown the motor 200 for driving the tube 1, 2. The motor for driving of the helical blade 700 is not shown.

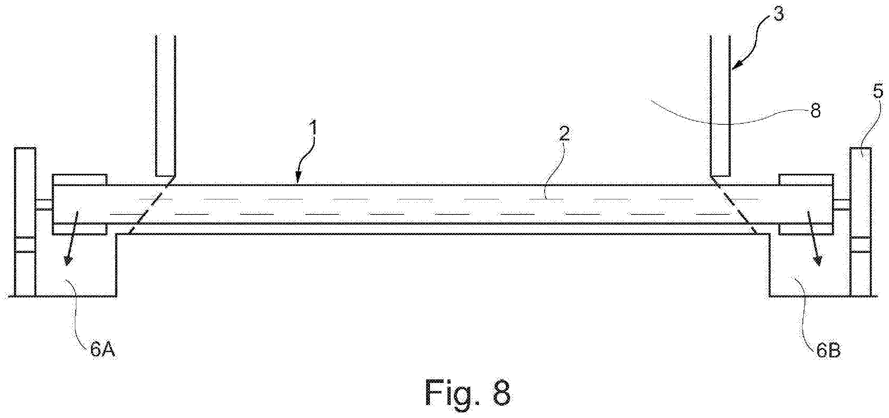

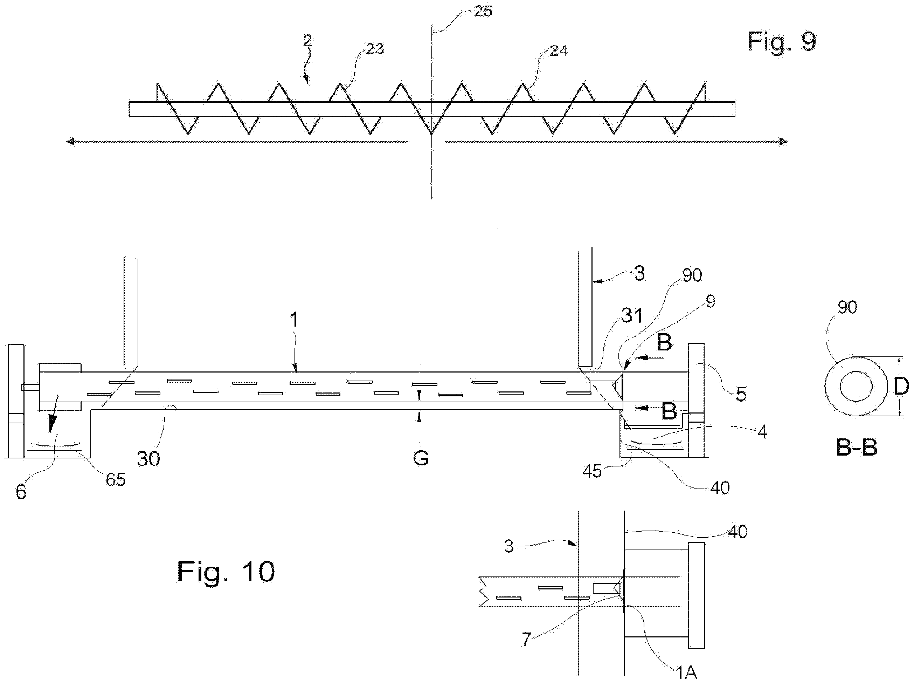

In Figs. 8 and 9 there is shown a further embodiment according to the invention, to avoid spillage at one end of the feeder tube 1, 2. In this embodiment the conveyor screw 2 is arranged to feed the bulk material 8 out from the silo 3 in both directions, such that it feeds out in a left outlet space 6A a and right outlet space 6B. In Fig. 9 it is shown that the screw conveyer 2 of this embodiment has helical blades that from a midpoint 25 of the screw conveyer 2 moves the bulk material in opposite directions. Hence the helical blades 23, 24 on opposite sides of the midpoint 25 are symmetrically arranged on both sides outwardly from that midpoint 25, where also a support for screw shaft can be arranged as option to restrict shaft deflection. It is evident that the "mid point" 25 must not be positioned in the middle, but any position, also far from the middle may be chosen. It is foreseen that this latter embodiment, and possibly also specific details described above, may be the object for its own protection, e.g. by means of filing a divisional application.

In Fig. 10 there is shown a side view of a modification in accordance with the invention, wherein the arrangement except for the extra feeding device 7 also is arranged with an extra anti-spillage arrangement 9. A basic part of the anti-spillage arrangement 9 is stop disc 90 that is fixed to the outer end 1A of the tube 1. The outer diameter D of the disc 90 is larger than the outer diameter of the tube 1, sufficiently so to extend further than the gap G and to cover the gap G between the tube 1 and the bottom 30 of the silo 3. The end of the tube 1A is positioned substantially in line with the inner wall 40 of the side space 4, such that the stop disc 90 will extend down into the space 4 near the inner wall 40, thereby hindering bulk from falling down into the inner space. (how near the disc 90 shall preferably be positioned may vary depending on the size of the bulk material, i.e. the gap shall be sufficiently small not to allow (most of) bulk material to pass through). The disc 90 may be annular and have its inner diameter substantially matching the outer diameter of the tube 1. It may be fixed to the tube 1 or rotationally mounted thereto. If the latter concept is used the disc 90 may be rectangular and fixed to the frame 5 in a manner to provide the same function as mentioned above to hinder spillage. As also shown in Fig. 10 the above modification may preferably be used in a silo 3 wherein band conveyers 45, 65 are used on each side and wherein more preferred two feeder tubes (merely one shown) are used, one to feed out in each direction.

The invention is not limited to what is described above but may be varied within the scope of the claims, accordingly it is for example evident that more than one larger openings 10 may be used in order to optimize the flow capacity in the side space 4, and that also different combinations of the devices described above may be used to optimize in different situations. Further, the mentioning of reclaimer is to be construed in a broad sense, since as is evident for the skilled person the functionality is not dependent on the application, i.e. it may be used in different kind of installations, e.g. called feeder tube, extractor, etc.

## Claims

1. Reversible feeder tube, i.e. a reclaimer, intended for bulk material, in particular a feeder tube (1, 2), which comprises a cylindrical drum or tube (1) in which there are accommodated a plurality of inlet openings (10, 11) distributed along the length of the tube, a screw conveyor (2) disposed coaxially with the tube within the tube (1), means for rotating the tube (1) about its axis, means (200) for rotating the screw conveyor (2) relative to the tube, means for moving the feeder tube in the lateral direction, within a silo (3) arranged to feed out bulk material (8) into an outlet space (6), wherein an outer tail end (1A) of the feeder tube protrudes through an opening (31) in the silo (3) into a side space (4) opposite the outlet space (6) and wherein a feeding device (7) is arranged adjacent said outer tail end (1A) to assist in feeding bulk material (8) away from said outer tail end (1A), independent of direction of rotation of the tube (1), **characterized by** said tube (1) having at least one inlet opening (10) of the tube (1) disposed in said side space (4), and said feeding device (7) arranged to push bulk material (8) into said inlet opening (10) of the tube (1) disposed in said side space (4), arranging in combination with said feeding device (7) said inlet opening (10) of the tube (1) disposed in said side space (4) having a substantially larger inlet area (A) than the area (a) of one of the plurality of the inlet openings (11) of the feeder tube (1, 2.) and by adjacent said outer tail end (1A) of said feeder tube (1, 2) arranging the screw conveyer (2) with two or several interposed helical blades (21, 22).

2. Reversible feeder tube according to claim 1, wherein the second additional blade (22) extends a substantial distance along the side space (4).

3. Reversible feeder tube according to claim 1, **characterized in that** the second helical blade (22) has a radial extension that is larger than the radial extension of the first helical blade (21), at least partly.

4. Reversible feeder tube according to any preceding claims, **characterized by** having said feeding device (7) in the form of a substantially triangular shaped body (70) that is fixed to the tube (1) and presenting pushing sides (71, 72) and a rear side (73).

5. Reversible feeder tube according to claim 4, **characterized by** said triangular shaped body (70) having a cover plate (74, 74') at the top thereof.

6. Reversible feeder tube according to claim 5, **characterized in that** at least one feeding device (7) has a cover plate (74) that is a curved.

7. Reversible feeder tube according to claim 6, **characterized by** said cover plate (74) having a circumferential extension that is longer than said rear side (73).

8. Reversible feeder tube according to any of claims 1-3, **characterized in that** said feeding device (7) is in the form of helical blade (700) arranged outside of the tube (1) and driven by an independent motor.

9. Reversible feeder tube according to any preceding claim, **characterized in that** an anti-spillage arrangement (9) is arranged adjacent an outer end (1A) of the tube (1).

## Patentansprüche

1. Reversibles Zulieferrohr, d.h. eine Wiedergewinnungsanlage, vorgesehen für Schüttgut, insbesondere ein Zulieferrohr (1, 2), das eine zylindrische Trommel oder ein Rohr (1), in dem eine Vielzahl von Einlassöffnungen (10, 11) entlang der Länge des Rohres verteilt sind, eine koaxial mit dem Rohr innerhalb des Rohres (1) angeordnete Förderschnecke (2), Mittel zum Drehen des Rohres (1) um seine Achse, Mittel (200) zum Drehen der Förderschnecke (2) relativ zum Rohr, Mittel zum Bewegen des Zulieferrohres in seitlicher Richtung innerhalb eines Silos (3), der zum Austragen von Schüttgut (8) in einen Auslassraum (6) angeordnet ist, umfasst, wobei ein äußeres Endstück (1A) des Zulieferrohrs durch eine Öffnung (31) im Silo (3) in einen Seitenraum (4) gegenüber dem Auslassraum (6) ragt und wobei eine Zuliefervorrichtung (7) benachbart zum äußeren hinteren Ende (1A) angeordnet ist, um bei der Zufuhr von Schüttgut (8) von dem äußeren hinteren Ende (1A) unabhängig von der Drehrichtung des Rohres (1) zu helfen, **gekennzeichnet durch** das Rohr (1), das wenigstens eine Einlassöffnung (10) des Rohrs (1) aufweist, die in dem Seitenraum (4) angeordnet ist, und die Zuliefereinrichtung (7), die angeordnet ist, um Schüttgut (8) in die Einlassöffnung (10) zu schieben, wobei in Kombination mit der Zuliefervorrichtung (7) eine Einlassöffnung (10) angeordnet ist, die eine im Wesentlichen größere Einlassfläche (A) als die Fläche (a) der Vielzahl der Einlassöffnungen (11) des Zulieferrohrs (1, 2) aufweist, und durch das Anordnen benachbart zum äußeren hinteren Ende (1A) des Zulieferrohrs (1, 2) den Schneckenförderer (2) mit zwei oder mehreren dazwischen angeordneten schraubenförmigen Klingen (21, 22).

2. Reversibles Zulieferrohr nach Anspruch 1, wobei sich die zweite zusätzliche Klinge (22) über eine beträchtliche Strecke entlang des Seitenraums (4) erstreckt.

3. Reversibles Zulieferrohr nach Anspruch 1, **dadurch gekennzeichnet, dass** die zweite schraubenförmige Klinge (22) wenigstens teilweise eine radiale Erstreckung aufweist, die größer ist als die radiale Erstreckung der ersten schraubenförmigen Klinge (21).

4. Reversibles Zulieferrohr nach einem der vorhergehenden Ansprüche, **dadurch gekennzeichnet, dass** die Zuliefervorrichtung (7) in Form eines im Wesentlichen dreieckig geformten Körpers (70) ausgebildet ist, der am Rohr (1) befestigt ist, und Schiebeseiten (71, 72) und eine Rückseite (73) aufweist.

5. Reversibles Zulieferrohr nach Anspruch 4, **dadurch gekennzeichnet, dass** der dreieckig geformte Körper (70) an seiner Oberseite eine Abdeckplatte (74, 74') aufweist.

6. Reversibles Zulieferrohr nach Anspruch 5, **dadurch gekennzeichnet, dass** wenigstens eine Zuliefervorrichtung (7) eine Abdeckplatte (74) aufweist, die gekrümmt ist.

7. Reversibles Zulieferrohr nach Anspruch 6, **dadurch gekennzeichnet, dass** die Abdeckplatte (74) eine Umfangserstreckung aufweist, die länger ist als die Rückseite (73).

8. Reversibles Zulieferrohr nach einem der Ansprüche 1-3, **dadurch gekennzeichnet, dass** die Zuliefervorrichtung (7) in der Form einer spiralförmigen Klinge (700) vorliegt, die außerhalb des Rohrs (1) angeordnet ist und von einem unabhängigen Motor angetrieben wird.

9. Reversibles Zulieferrohr nach einem der vorhergehenden Ansprüche, **dadurch gekennzeichnet, dass** eine Anti-Überlaufanordnung (9) benachbart zu einem äußeren Ende (1A) des Rohrs (1) angeordnet ist.

## Revendications

1. Tube d'alimentation réversible, c'est-à-dire un récupérateur, destiné à du matériau en vrac, en particulier un tube d'alimentation (1, 2) qui comprend un tambour ou un tube cylindrique (1) dans lequel est aménagée une pluralité d'ouvertures d'entrée (10, 11) réparties sur la longueur du tube, un convoyeur à vis (2) disposé coaxialement au tube à l'intérieur du tube (1), des moyens pour faire tourner le tube (1) autour de son axe, des moyens (200) pour faire tourner le convoyeur à vis (2) par rapport au tube, des moyens pour déplacer le tube d'alimentation dans la direction latérale, dans un silo (3) agencé pour évacuer le matériau en vrac (8) dans un espace de sortie (6), une extrémité postérieure extérieure (1A) du tube d'alimentation faisant saillie à travers une ouverture (31) aménagée dans le silo (3) dans un espace latéral (4) opposé à l'espace de sortie (6) et un dispositif d'alimentation (7) étant agencé de façon adjacente à ladite extrémité postérieure extérieure (1A) pour assister l'alimentation en matériau en vrac (8) en éloignement de ladite extrémité postérieure extérieure (1A), indépendamment du sens de rotation du tube (1), **caractérisé par le fait que** ledit tube (1) présente au moins une ouverture (10) d'entrée du tube (1) disposée dans ledit espace latéral (4), et ledit dispositif d'alimentation (7) agencé pour pousser le matériau en vrac (8) dans ladite ouverture d'entrée (10) du tube (1) disposée dans ledit espace latéral (4), par le fait d'agencer en combinaison avec ledit dispositif d'alimentation (7) ladite ouverture d'entrée (10) du tube (1) disposée dans ledit espace latéral (4) de sorte qu'elle ait une surface d'entrée (A) sensiblement plus grande que la surface (a) de l'une parmi la pluralité des ouvertures d'entrée (11) du tube d'alimentation (1, 2) et par le fait, de façon adjacente à ladite extrémité postérieure extérieure (1A) dudit tube d'alimentation (1, 2), agencer le transporteur à vis (2) avec deux ou plusieurs lames hélicoïdales (21, 22) interposées.

2. Tube d'alimentation réversible selon la revendication 1, dans lequel la deuxième lame supplémentaire (22) s'étend sur une distance substantielle le long de l'espace latéral (4).

3. Tube d'alimentation réversible selon la revendication 1, **caractérisé en ce que** la deuxième lame hélicoïdale (22) présente une extension radiale qui est plus grande que l'extension radiale de la première lame hélicoïdale (21), au moins en partie.

4. Tube d'alimentation réversible selon l'une quelconque des revendications précédentes, **caractérisé en ce que** ledit dispositif d'alimentation (7) se présente sous la forme d'un corps de forme sensiblement triangulaire (70) qui est fixé au tube (1) et présente des côtés de poussée (71, 72) et un côté arrière (73).

5. Tube d'alimentation réversible selon la revendication 4, **caractérisé en ce que** ledit corps de forme triangulaire (70) comprend une plaque de recouvrement (74, 74') au sommet de lui.

6. Tube d'alimentation réversible selon la revendication 5, **caractérisé en ce qu'**au moins un dispositif d'alimentation (7) comporte une plaque de recouvrement (74) incurvée.

7. Tube d'alimentation réversible selon la revendication 6, **caractérisé en ce que** ladite plaque de recouvrement (74) a une extension circonférentielle qui est plus longue que ledit côté arrière (73).

8. Tube d'alimentation réversible selon l'une quelconque des revendications 1 à 3, **caractérisé en ce que** ledit dispositif d'alimentation (7) se présente sous la forme d'une lame hélicoïdale (700) agencée à l'extérieur du tube (1) et entraînée par un moteur indépendant.

9. Tube d'alimentation réversible selon l'une quelconque des revendications précédentes, **caractérisé en ce qu'**un dispositif anti-débordement (9) est disposé au voisinage d'une extrémité externe (1A) du tube (1).
